# EUROPEAN PATENT APPLICATION

(11) **EP 4 332 922 A1**
(43) Date of publication of application: **06.03.2024**
(21) Application number: 22193976.2
(22) Date of filing: 05.09.2022
(51) Int. Cl.: G07C 9/00, G07C 9/25

(54) **METHODS AND SYSTEMS FOR IDENTIFYING A PERSON**

(71) Applicant: Nagravision Sarl, 1033 Cheseaux-sur-Lausanne (CH)
(72) Inventor: DEVALLONNE, Luc, 1033 Cheseaux-sur-Lausanne (CH); GREMAUD, Fabien, 1033 Cheseaux-sur-Lausanne (CH); GRADASSI, Luca, 1033 Cheseaux-sur-Lausanne (CH)
(74) Representative: Mewburn Ellis LLP

(57) **Abstract**

The invention refers to a method for identifying a person (16), comprising the steps of storing information on the identity of the person (16) and/or access authorization data on the mobile device (16) as well as storing biometric data (37) of the person (16) on a mobile device (14) of the person (16); sending the identity information of the person (16) and/or the access authorization data from the mobile device (14) to an authorization device (18); obtaining biometric data (37) of the person (16) by an identification device (20); sending the biometric data (37) from the identification device (20) to the mobile device (14); comparing, only on the mobile device (14), the biometric data (37) from the identification device (20) with the stored biometric data (37) for verifying the identity of the person (16); and sending a confirmation signal from the mobile device (14) to the authorization device (18) if the comparison of step e) verifies the identity of the person (16).

## Description

The present invention relates to a method for identifying a person comprising the steps of sending identity information of a person from a mobile device to an authorization device and obtaining biometric data of the person by an identification device.

The invention further refers to a system for identifying a person which comprises a mobile device, an identification device configured to obtain biometric data of the person, and an authorization device.

The invention also relates to a method for identifying a person comprising the steps of sending identity information of a person from a mobile device to an authorization device and receiving biometric data of the person by an identification device.

The invention further relates to a mobile device, comprising a memory, a processor, and a transceiver, wherein the memory is configured to store information on the identity of a person.

Access control systems for persons (which are sometimes called checkpoints) are known from the prior art. They can comprise means for the detection and evaluation of access authorization s as well as mechanical blocking elements, for example in the form of turnstiles, sliding doors, lifting-sliding doors or so-called flap gates, whereby the blocking elements are actuated in the presence of a valid access authorization.

People are becoming more reluctant about having their private information and scanned facial images (or any type of biometric information) stored or saved by third parties, including government agencies and private companies. People often do not want entities, even ones they trust, to store and keep facial scans of them. At the same time, people want to be able to get through environments that require multiple checkpoints easier and seamless.

The present invention is based on the objective of providing easy and seamless access while reducing transfer of data sensitive to the user to a third party.

This objective is solved by the subject matter of the independent claims. Optional embodiments are described in the depending claims.

A method for identifying a person comprises the steps of
a) storing information on the identity of the person (identity information) and/or access authorization data t on the mobile device as well as storing biometric data of the person on a mobile device of the person;
b) sending the identity information of the person and/or the access authorization data from the mobile device to an authorization device;
c) obtaining biometric data of the person by an identification device,
d) sending the biometric data from the identification device to the mobile device,
e) comparing, only on the mobile device, the biometric data from the identification device with the stored biometric data for verifying the identity of the person; and
f) sending a confirmation signal from the mobile device to the authorization device if the comparison of step e) verifies the identity of the person.

A method for identifying a person is implemented on a mobile device of a person and comprises the steps of
a) storing information on the identity of the person and/or access authorization data on the mobile device as well as storing biometric data of the person on the mobile device;
b) sending the identity of the person and/or the access authorization data from the mobile device to an authorization device;
c) receiving biometric data obtained by an identification device;
d) comparing the biometric data from the identification device with the stored biometric data for verifying the identity of the person; and
e) sending a confirmation signal from the mobile device to an authorization device if the comparison of step d) verifies the identity of the person.

Further, a system for identifying a person comprises a mobile device, an identification device, and an authorization device. The mobile device stores information on the identity of the person, access authorization data, and/or biometric data of the person. The identification device is configured to obtain biometric data of the person. The identification device is configured to send the obtained biometric data of the person to the mobile device. Only the mobile device is configured to compare the biometric data from the identification device with the stored biometric data for verifying the identity of the person. The mobile device is configured to send the identity of the person and/or the access authorization data to the authorization device and is configured to send a confirmation signal to the authorization device if the comparison verifies the identity of the person.

Still further, a mobile device comprises a memory, a processor, and a transceiver. The memory is configured to store information on the identity of a person, access authorization data, and/or biometric data of the person. The processor is configured to send the identity of the person and/or the access authorization data to an authorization device via the transceiver, receive biometric data obtained by an identification device via the transceiver, compare the biometric data from the identification device with the stored biometric data for verifying the identity of the person, and send a confirmation signal, via the transceiver, to an authorization device if the comparison of step d) verifies the identity of the person.

According to the invention, an organization or entity can maintain data privacy by not storing biometric data, such as facial images of users (e.g. there is no repository or database of facial scans). Further, the organization or entity can improve efficiency of the organization's systems so that its users can pass its checkpoints faster and seamlessly (e.g., users do not have to take out papers or even their phones when passing through checkpoints).

The invention relates to an interaction between an access control system and the mobile device of a person who intends to access a restricted area that is restricted by access control system. The access control system may include an access control means such as one or more blocking elements which may comprise mechanical blocking elements, for example in the form of turnstiles, turnstiles with one, two or three blocking arms, sliding doors, lifting-sliding doors or so-called flap gates. The blocking elements can be actuated in case of a valid access authorization which is checked by the interaction of the access control system and the mobile device.

The access control system can include an identification device and an authorization device. The identification device includes one or more sensors for obtaining raw data indicative of the person. For example, the identification device includes a camera or video camera for imaging the person and generating raw image data. The raw image data are in such a format that they can be processed by an external computing device. For example, the computing device can process the image data for generating an image or video of the person. Alternatively or additionally, the identification device includes a fingerprint scanner generating raw fingerprint data. Again, the raw fingerprint data may be in such a format such that they can be processed by an external computing device. For example, the computing device can process the raw fingerprint data for generating an image of the fingerprint. In general, the identification device is configured to obtain data indicative of the person using the sensor.

The identification device can further include a computing device which may include an access processor and/or an access memory for storing and processing digital data, for example the raw data generated by the sensors. The computing device may be configured to generate or calculate meta data from the data generated by the sensors. The raw data and the meta data may be considered two forms of biometric data. So, the raw data may also be called raw biometric data and/or the meta data may also be called meta biometric data.

For example, the computing device may generate face recognition data (an example of meta data) and/or eye/retina recognition data (a further example of meta data) from the image of a face of a person (an example of raw data). This can be done by identifying a face and/or eye in an image and/or video stream and processing the image of the face and/or eye of the person by using a certain function and/or protocol (which may be known in the art). The meta data, e.g. the face recognition data and/or the eye recognition data, are a dataset unique to the person. In other words, a person can be uniquely identified by the meta data, e.g. the face recognition data and/or the eye recognition data. For example, the identification device generates/calculates a vector indicative of the face and/or an eye of the person. Similarly, the computer device may be configured to generate fingerprint recognition data from the raw data generated by the fingerprint sensor. Here again, the identification device may use a commonly known function and/or protocol for processing the raw data into the fingerprint recognition data. The computing device is in data communication (e.g. via wires) with the sensors, e.g. the (video) camera and/or the fingerprint scanner.

The processing of the raw data generated by the sensors of the identification device may allow the reduction of the volume of the data and/or allow comparability with other meta biometric data, such as other facial, eye, and/or fingerprint recognition data. For example, it can be checked whether a person is identical to another person based stored in a system by comparing the face recognition data stored in the system with the face recognition data generated from an image of the person. For example, the meta biometric data complies with a standard function and/or format for the meta biometric data so that the meta biometric data can be compared. This may be achieved by processing/calculating the raw data generated by the sensors by a certain function.

The identification device does not store/save the meta biometric data and/or the raw biometric data generated by the sensors. For example, the computing device of the identification device includes an algorithm or program which deletes the meta biometric data and the raw biometric data after it is processed and sent to the mobile device.

The identification device may include an access transceiver for wireless communication with the mobile device. The access transceiver may be in data communication with the access processor and the access memory of the identification device. For example, the identification device is configured to execute a handshake between the identification device and the mobile device and setup a secure communication channel if the person approaches the identification device and/or the access control system. The identification device may further be configured to, after receiving a prompt from the mobile device, start obtaining the raw data using the sensors, processing the raw data for generating the meta biometric data, and sending the generated meta biometric data to the mobile device via the access transceiver. For example, the person approaches the identification device. A secure data channel is established between the mobile device and the identification device. Subsequently, the mobile device sends a prompt to the identification device which triggers the identification device to generate the meta biometric data as described above. The generated meta biometric data is then sent back to the mobile device for further processing. Optionally, the interaction of the identification device and the mobile device is autonomous from a manual input by the person. For example, the person does not need to use the mobile device for the interaction of the identification device and the mobile device to happen. Alternatively, the interaction is designed that the person starts the interaction or controls steps of the interaction. For example, the person may prompt the mobile device to set up a secure communication with the identification device or the signal for starting the generation of the meta biometric data is only sent to the identification device if the person manually confirm this.

The mobile device may be a handheld user device which can be a mobile phone or the like. The mobile device includes a processor, a memory, and a transceiver. The memory may be configured to store programs, algorithms, and/or applications which can be executed by the processor. The memory is further configured to store information on the identity of the person and biometric data of the person. The mobile device may further include a display, a camera, and/or a fingerprint sensor which are in data communication with the processor and/or the memory. The transceiver of the mobile device can allow wireless data communication with the identification device and/or the internet. For example, the transceiver can connect to a cellular network or mobile network. The transceiver allows data communication between the mobile device on the one hand and the identification device and/or the authorization device on the other hand.

The information on the identity of the person (identification information) may include personal data such as name, address, date of birth, etc. Further, the identification information may include a unique number assigned to the person which allow unique identification of the person based on the number, for example an employment number and/or a registration number. The identification information may be attested by a third party as described below.

The biometric data stored on the mobile device may be generated based on the same protocol as the biometric data generated by the identification device. Alternatively or additionally, the biometric data stored in the mobile device has to same format as the biometric data generated by the identification device such that the biometric data stored on the mobile device and the biometric data generated by the identification device can be compared by a software, algorithm, and/or application stored on the mobile device. In general, the biometric data stored in the mobile device and the biometric data generated by the identification device are in a format that allows automatic comparison of the two datasets, for example using a computing device, such as the processor and memory of the mobile device.

The software, algorithm and/or application stored on the mobile device which executes the comparison of the two sets of biometric data may be designed such that the person cannot change the comparison of the two sets of biometric data. For example, the software, algorithm and/or application may be certified in that the comparison cannot be changed, modified or otherwise influenced by the person so that the comparison can be trusted. software, algorithm and/or application stored on the mobile device which executes the comparison of the two sets of biometric data may be considered a secure element of the mobile device. This may be an important feature of the invention since the comparison of the two sets of biometric data is solely executed on the mobile device. So there needs to be trust by the operator of the authorization device in that the comparison is correct, namely that the person trying to access to restricted area is indeed the person as identified by them biometric data.

The software, algorithm and/or application stored on the mobile device which executes the comparison of the two sets of biometric data may also be certified by a third party, for example that the above-described conditions are fulfilled. This allows that any person or company can provide the software, algorithm and/or application stored on the mobile device as long it is certified by the third party. Alternatively, the stored on the software, algorithm and/or application stored on the mobile device may only be provided by the operator of the access control means and/or the authorization device. This may help to ensure that the execution of the identification step can be trusted.

The comparison of the two sets of biometric data may result in a generation of the confirmation signal (which may be a simple "Yes" and/or which is then sent to the authorization device) if the two sets of biometric data are considered to relate to the same person. If the comparison of the two sets of biometric data indicates that to sets of biometric data refer to two different persons, the mobile device may send no configuration signal or a signal of non-confirmation (which may be a simple "No").

The two sets of biometric data may be considered relating to the same person if a confidence level of the comparison is above 90% or 95%. The confidence level may be part of the configuration or requested by the authorization device and/or operator of the access control system per specific use-case (e.g. security area access vs public transportation).

The authorization device may also include a computing device and/or an authorization transceiver. The computing device of the authorization device may include an authorization processor and an authorization memory for storing and executing software, programs, algorithms, and/or other applications. The authorization transceiver provides wireless data communication between the mobile device and/or the identification device. The authorization device is configured to control the access to the restricted area. The access to the restricted area controlled by the access control system is granted if the comparison of the two sets of biometric data is affirmative and the identity information sent from the mobile device to the authorization device is considered to be eligible for access to the restricted area. In particular, the authorization device can grant access to the restricted area without receiving biometric data from the identification device and/or from the mobile device. In this case, the authorization device grants access based only the configuration signal (if the comparison between the two sets of biometric data is affirmative) and the identity information. So, the authorization device may never receive biometric data of the person.

An aspect of the invention can be the fact that no meta biometric data or raw biometric data from which meta biometric data can be generated is stored on the identification device. A further aspect of the invention can be that the authorization device never receives biometric data from the person. Both aspects may contribute to data security since no biometric data is sent from the mobile device to an external party and no biometric data needs to be stored by a third party. Biometric data is only stored on the mobile device by the person. So the person can have full control over their biometric data. This is achieved by the fact that the comparison of the biometric data is executed solely on the mobile device and not by a third party, e.g. the access control system.

In an optional embodiment, the access authorization data are associated with identity of the person and/or the biometric data. The access authorization data may include and/or define an authorization token. Alternatively or additionally, the access authorization data may include and/or define a (virtual) ticket.

The invention provides at least three embodiments for granting access to the restricted area. In a first embodiment, access is granted if the identification information is valid and the biometric data match (i.e. comparison of step e) verifies the identity of the person). This will be described further below.

In a second embodiment for accessing the restricted area, the access to the restricted area controlled by the access control system is dependent on a further condition, namely valid access authorization data, e.g. a valid ticket. The access authorization data and/or the ticket may be purchased and/or stored on the same secure element of the mobile device, e.g. a software, algorithm, program and/or application of the mobile device that stores the identification information and the biometric data. The access authorization data and/or the ticket may be linked to the identification information. The authorization device may include a databank of all valid access authorization data and/or the valid tickets so that the authorization device may compare the access authorization data/ticket of the person sent from the mobile device with the databank to assess whether the access authorization data/ticket of the person is valid or not. The authorization device may delete the access authorization data/ticket from the databank of valid authorization data/tickets after access has been granted to the person.

In a third embodiment for accessing the restricted area, the access is granted if the access authorization data and/or the ticket are valid and the comparison of step e) verifies the identity of the person. This third embodiment does not include storing the identification information on the mobile device and transmitting the identification information to the authorization device. So, access is granted without identification information but solely on the basis of valid access authorization data and matching biometric data. This third embodiment provides that no identification information is sent from the mobile device to the authorisation device.

In an optional embodiment, the invention further comprises an access control means for (physically) allowing or denying access to a restricted area, wherein the method further comprises step g) of sending, by the authorization device, an access signal allowing access by the access control means to the access control means if the confirmation signal is received by the authorization device and if the authorization device determines that the person is authorised to pass the access control means.

In an optional embodiment, the system for identifying a person further includes an access control means for allowing or denying access to a restricted area, wherein the authorization device is configured to send an access signal allowing access by the access control means to the access control means if the confirmation signal is received by the authorization device and if the authorization device determines that the person is authorised to pass the access control means.

The access control means may unlock the blocking elements or open the blocking element after receipt of the access signal from the authorization device. This means that the access control means is controlled by the authorization device (using the access signal) and is in data communication with the authorization device. For example, the access control means shares the access transceiver with the identification device. Alternatively, the access control means includes a separate transceiver for data communication with the authorization device.

In an optional embodiment, the person is authorised to pass the access control means if the identity of the person is on a list of authorised persons stored with the authorization device and/or the access authorization data are valid.

For example, the identification information of the person is stored with the authorization device on a list of persons which are allowed to pass the access control means. So, the authorization device checks whether the person is eligible to access the restricted area by checking the identification information. The access signal is sent to the access control means if this check is affirmative and the confirmation signal is received from the mobile device. This is an example of the above-described first embodiment for accessing the restricted area. Alternatively or additionally, the access signal is only generated if, in addition, the access authorization data sent from the mobile device to authorization device are considered to be valid. This is an example of the above-described second embodiment for accessing the restricted area.

In an optional embodiment, the authorization device, the access control means, and the identification device are integrated in a single system exchanging information.

The authorization device, the access control means, and identification device may form the access control system or in other words a unitary system. The authorization device, the access control means, and identification device may be all arranged on site, for example at the airport, at an event venue, or other locations where automatic access is required. For example, the authorization device may be a central server which is in data communication with a plurality of access control means and a plurality of identification devices. Each access control means may be provided with an identification device. Alternatively, there are plurality of access control systems wherein each access control system includes the authorization device, the access control means, and the identification device. For example, the access control means includes a housing in which the authorization device is located, and the identification device is attached to the housing of the control means. In this case, the data communication between the mobile device on the one hand and the authorization device and identification device on the other hand may be executed via a common transceiver such as the access transceiver. It is also possible that a plurality of access control means and/or a plurality of identification devices share a common transceiver i.e. not each identification device is provided with an access transceiver but data communication with the mobile device is executed via the common transceiver. In this embodiment, the authorization device may be connected to the identification device and or the access control means via wires for data communication. This means that information that is accessible by the authorization device is in principle accessible by the identification device and vice versa. So, there may not be a clear data separation between the identification device and the authorization device. This may simplify data communication between the authorization device and the identification device and/or the identification device and the authorization device may share components, such as a processor and/or a memory.

In an optional embodiment, the mobile device communicates with the identification device and/or the authorization device using short-range wireless technology.

The short-range wireless technology may include at least one of: Bluetooth, Bluetooth Low Energy (BLE), Zigbee, infrared, Ultra-wideband (UWB), and Wi-Fi. This means that the mobile device, the identification device and/or the authorization device are provided with a transceiver configured to use short-range wireless technology. One advantage of using short-range wireless technology, especially for the communication between the mobile device and the identification device, is that the identification device is notified of the presence of a mobile device and, consequently, of the presence of the person wanting access to the restricted area. Thus, the identification device may be configured to search for mobile devices using short-range wireless technology. Further, if a secure communication between identification device and the mobile device is established, this can be used as a trigger point for activating the sensors of the identification device for obtaining the raw data, e.g. starting the camera or the fingerprint scanner. Further, use of short-range wireless technology (i.e. the communication between the mobile device and the identification device) may also be possible if the mobile device is in the standby mode. This may facilitate data exchange between identification device and the mobile device without user interaction, i.e. the software, algorithm, program, and/or application of the mobile device may autonomously communicate with the identification device for receiving the biometric data generated by the identification device and, subsequently, sending the confirmation signal to the authorization device.

In an optional embodiment, the authorization device is separate to the identification device and the access control means, wherein the identity of the person remains solely with the authorization device.

The authorization device may be a remote server or may be implemented by a cloud-based solution. Further, the authorization device may be in control of a party (organisation, service provider, company, etc) that is separate to the operator of the identification device and the access control means. In this case, the operator of the identification device and the access control means does not receive any biometric data from the person as well as the identity information and, optionally, does not store biometric data of the person. Rather, the identification device generates the biometric data which is sent to the mobile device. The mobile device compares the stored biometric data with that biometric data received from the identification device and sends the confirmation signal to a third party, i.e. the operator of the authorization device. The authorization device checks whether the person is eligible to enter the restricted area after receiving the confirmation signal. If so, the authorization device sends the access signal to the access control means for granting access by the access control means. Thus, the identification device and the access control means only receive information that the mobile phone is present and access to the owner of the mobile device is to be granted. The identification device may optionally send a notice to the authorization device that it is in communication with a mobile device and/or has sent the biometric data to the mobile device so that the authorization device is aware that a confirmation signal may follow shortly.

In an optional embodiment, the mobile device communicates with the identification device using short-range wireless technology and the mobile device communicates with the authorization device via the internet.

In this scenario, the mobile device includes a transceiver for short-range wireless technology as outlined above and a further transceiver for data communication with a mobile network. Further, there identification device and/or the access control means can be configured for data communication with authorization device via internet. This allows that the authorization device can be placed remote from the identification device and/or the access control means.

In an optional embodiment, the information on the identity of the person and the biometric data of the person is verified by a third party and cannot be changed by the person.

The third party may be the operator of the authorization device or any other company, organisation and/or service provider which is entrusted by the operator of the access control means to verify the identification information and/or the biometric data. For example, the third party may check that the biometric data corresponds to the person. This may be desired if the biometric data and/or the identification information is input by the person themselves. For example, the mobile device may include a camera which is used to capture an image of a face of the person. The mobile device may further be configured to generate the meta biometric data (e.g. face recognition data) using the same protocol and/or format as the identification device. Alternatively, the mobile device may include a fingerprint scanner which allows the generation of fingerprint recognition data by the mobile device.

Alternatively, the third party may generate the biometric data and sends the biometric data to mobile device. For example, the person visits the third party which takes an image of the person and generates the face recognition data using the same protocol and/or format as the identification device. Then, the third party sends the face recognition data along with identification information to the mobile device. This procedure may also be applied for fingerprint recognition data or other types of meta biometric data. Thereby, the third party may be a trusted entity which guarantees the correctness of the biometric data in connection with the identification information.

In an optional embodiment, the identification device and/or the mobile device include a camera and the biometric data includes face recognition data. Further optionally, the identification device and/or the mobile device include a fingerprint scanner and the biometric data includes fingerprint recognition data.

In an optional embodiment, step b) further comprises sending a unique identifier of the biometric data to the authorization device, the unique identifier uniquely defines the biometric data but does not allow conversion of the unique identifier into the biometric data, wherein the authorization device denies access if the unique identifier was already used with another person.

The unique identifier may include a hash and/or a watermarking of the biometric data. The hash may be created by a nonce. The unique identifier may be generated by the secure element (e.g. the software, algorithm, program and/or application) on the mobile device using well known techniques for generating hash values and/or watermarking. Alternatively, the unique identifier is generated by the third party when providing the biometric data. The unique identifier allows a unique identification of the biometric data, but a reverse identification is not possible. This means that the biometric data cannot be extracted from the unique identifier. This ensures that the authorization device cannot process the biometric data from the unique identifier. However, the authorization device can check whether the biometric data identified by the unique identifier has already been used in connection with a different person. In this way, freshness of the biometric data can be ensured and prevention of replay attacks (i.e. the same image and, therefore biometric data is used for two different persons) can be avoided.

The authorization device may store the unique identifiers it has received from the various mobile devices. In this way, the authorization device could deny access if the same biometric data as identified by unique identifier has already been used by a different person. At the same time, anonymity of the persons can be ensured since the unique identifier does not allow re-creation of the biometric data.

In an optional embodiment, the identification device does not store the biometric data obtained in step c). For example, the raw data and the meta data are reliable deleted from the memory of the identification device after the biometric data has been sent to the mobile device. Alternatively, the identification device is configured so that no data generated by sensors can be reliably or permanently stored.

In an optional embodiment, step d) includes sending the raw data of the biometric data obtained in step c) or the identification device creates meta data of the raw data obtained in step c).

The raw data may correspond to the data is generated by the sensors of the identification device as discussed above. The meta data may correspond to the biometric data as also described above. However, in an alternative and/or additional embodiment, the identification device does not generate meta biometric data but rather sends the raw biometric data generated by sensors (i.e. the raw image data or the raw fingerprint data) to the mobile device. This may increase the amount of data that needs to be sent to the mobile device. On the other hand, the identification device does not need to be configured to generate the meta biometric data. So the identification device can be made simpler. Further, the incapability of the identification device to generate the meta biometric data from the raw biometric data may be regarded as a further security feature in that no external device generates meta biometric data. This is solely done on the mobile device. In this case, the mobile device needs to have an algorithm, software, and/or application which can generate the meta biometric data from the raw biometric data received from the identification device. This can be done as described above.

The invention is explained in more detail below by way of example with reference to the accompanying figures.
- Fig.1: shows a schematic representation of a first embodiment of a system for identifying a person;
- Fig.2: shows a schematic representation of a second embodiment of the system for identifying a person;
- Fig. 3: shows a schematic representation of a mobile device of the system for identifying a person;
- Fig. 4: shows a schematic representation of a method for identifying a person and allow access to a restricted area;
- Fig.5: shows a block diagram of the method for identifying a person and allow access to a restricted area of Fig. 4.

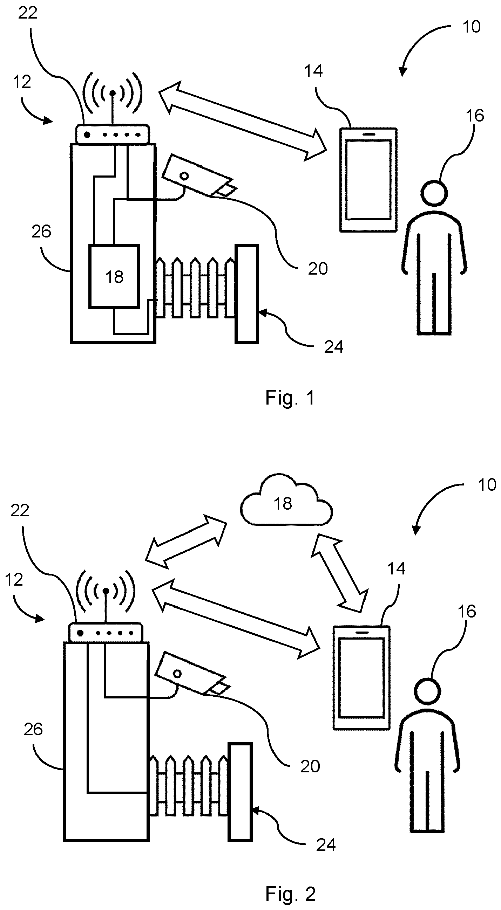

Fig. 1 shows a system 10 for identifying a person 16 which also is capable of allowing or denying access to a restricted area. The system 10 for identifying a person 16 includes an access control system 12, a mobile device 14, and the person 16. The access control system 12 may provide an automatic gate at an airport or at an event location such as a sport stadium. The person 16 approaches the access control system 12 carrying the mobile device 14 which automatically communicates with the access control system 12. Based on the communication between the access control system 12 and the mobile device 14, the person 16 is granted or denied access to the restricted area.

In the embodiment of Fig. 1, the access control system 12 includes an authorization device 18, an identification device 20, and access transceiver 22, and/or an access control means 24. The authorization device 18 is in data communication with the access transceiver 22, the identification device 20, and the access control means 24. This is indicated in Fig. 1 by the schematic wires which allows data communication between the respective components. The authorization device may be located within a housing 26 of the access control system 12. The transceiver 22, the identification device 20, and/or the access control means 24 can be attached to the housing 26 and/or arranged therein.

The authorization device 18 includes a processor and a memory (not shown in the figures) for executing various programs and/or algorithms. The authorization device 18 may be configured to control the identification device 20 and the access control means 24. Further, the authorization device 18 may exchange data with the mobile device 14 via the access transceiver 22.

In the embodiment of Fig. 1, the identification device 20 includes a camera which is configured to image a vicinity of the access control system 12, in particular a face of the person 16 standing close to the access control means 24. The access control means 24 includes a blocking element (indicated by the fence in Fig. 1) which can be automatically opened or unlocked under the control of the authorization device 18. If the blocking element is opened or unlocked, the person 16 can access the restricted area.

The access transceiver 22 is configured to provide short-range wireless communication between the access control system 12 and the mobile device 14. For example, the access transceiver 22 provides Bluetooth Low Energy (BTLE). In the embodiment of Fig. 1, all components of the access control system 12 are arranged on site and data communication is established between the components on site.

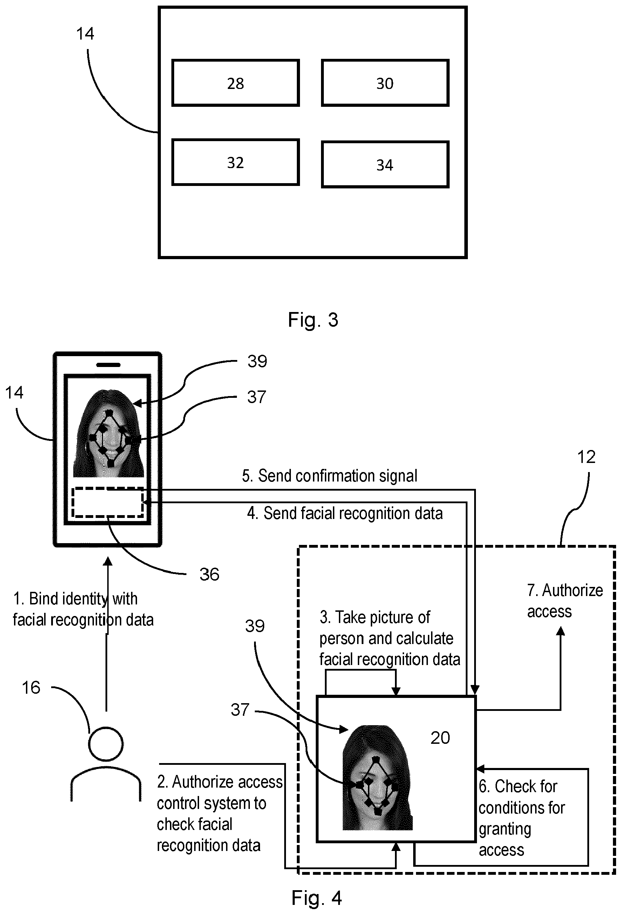

Fig. 3 shows the functional components of the mobile device 14 which may be a mobile phone. The mobile device 14 can include a processor 28, a memory 30, a transceiver 32, and/or a camera 34. The processor 28 may be configured to control the transceiver 32 and/or the camera 34. Further, the processor 28 is in data communication with the memory 30, the transceiver 32, and/or the camera 34. The processor 28 may be configured to execute various programs, algorithms and/or applications that are stored in the memory 30. For example, the memory 30 stores biometric data 37 and information on the identity of the person 16. The transceiver 32 can connect to a cellular network or mobile network for providing internet access and/or provide short-range wireless communication with the access transceiver 22. The person 16 can use the camera 34 for taking an image of the face of the person 16. The processor 28 may be configured to generate face recognition data (an example of meta biometric data 37) from the image taken by the camera 34 (an example of raw biometric data 39) and store the process face recognition data in the memory 30. For example, the processor 28 executes a protocol which transforms the image into biometric face recognition data. The protocol may be part of an application stored on the mobile device 14 which cannot be changed by the person 16. This application may be considered a secure element 36 (see Fig. 4). Further, the mobile device 14 may include an input device allowing the person 16 to input information on the identity of the person 16 (e.g. name, address, date of birth) which can also be stored in the memory 30 (e.g. in the secure element 36).

The mobile device 14 may also be configured to receive access authorization data, e.g. a virtual ticket, via the transceiver 32 and store the access authorization data in the memory 30 (e.g. in the secure element 36). The access authorization data may be associated with identity information and the face recognition data.

The embodiment of Fig. 2 includes the same features, characteristics, and optional components as the embodiment of Fig. 1 except for the following differences:
The authorization device 18 is not provided with the identification device 20, the access transceiver 22, and the access control means 24 (as in the embodiment of Fig. 1), but remote from these components. For example, the authorization device 18 may be implemented by a remote server - indicated by the cloud in Fig. 2. Here again, the authorization device 18 may include a processor and a memory for executing functions similar to the embodiment of Fig. 1. However, the authorization device 18 may not control the access transceiver 22 and the identification device 20, but only the access control means 24. These components may have their own processors and memory for the control thereof. The authorization device 18 may include a transceiver (not shown in Fig. 2) for data communication with the mobile device 14 and the access transceiver 22. The authorization device 18 is configured to send an access signal to the access transceiver 22 which prompts the access control means 24 to grant access for the person 16. In this way, the authorization device 18 is configured to control the access control means 24.

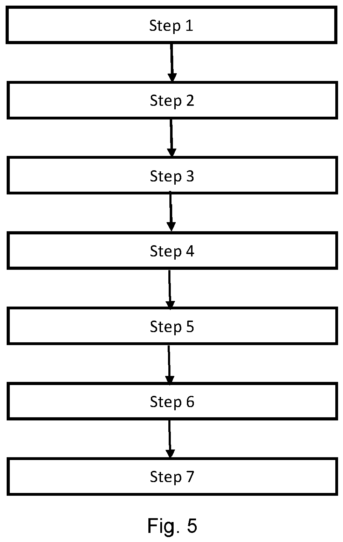

A method for operating the system 10 for identifying the person 16 and allowing access of the person 16 to the restricted area is described in connection with Fig. 4 and the block diagram of Fig. 5.

In step 1 and corresponding numeral 1 in Fig. 4, the person 16 takes a picture of their face using the camera 34. The processor 28 of the mobile device 14 generates biometric face recognition data from the image and stores the biometric face recognition data with the memory 30. Further, identification information of the person 16 is stored in the memory 30 which can be manually input by the person 16. These two processes can be executed within the secure element 36. Alternatively, a third party such as an external service provider takes a picture of the person 16, processes the image for generating biometric face recognition data, and sends the generated face recognition data to mobile device 14 for being stored on the memory 30. Similarly, the third party can verify the identification information of the person 16 and send this verified identification information to mobile device 14 for being stored with the memory 30. The biometric face recognition data may be generated using a predetermined protocol. Further, the mobile device 14 is configured such that the face recognition data and the identification information cannot be changed by the person 16. This ensures that the biometric face recognition data and identification information can be trusted since it cannot be changed by the person 16.

In step 2 and corresponding numeral 2 in Fig. 4, the mobile device 14 and the access control system 12 get in data communication which each other, for example if the mobile device 14 is within the range of the short-range wireless access transceiver 22. Optionally, the mobile device 14 and the access control system 12 set up a secure communication. Further, the processor 28 of the mobile device 14 generates a signal that authorizes the identification device 20 to take image of the person 16.

In step 3 and corresponding numeral 3 in Fig. 4, the identification device 20 takes an image of the face of the person 16, identifies the face of the person 16 in the image, and generates biometric face recognition data from the image using the same protocol as executed when generating the biometric face recognition data stored on the mobile device 14. This allows that the biometric face recognition data generated by the access control system 12 can be compared to the biometric face recognition data stored on the mobile device 14. The generation of the biometric face recognition data is executed by the authorization device 18 in the embodiment of Fig. 1 and by a processor of the identification device 20 in the embodiment of Fig. 2. Each time, the communication between the mobile device 14 and the identification device 20 is done via the access transceiver 22. The access control system 12, the authorization device 18, and/or the identification device 20 does not store biometric face recognition data and the raw image data. Any data generated during the process is deleted after sending the biometric face recognition data to the mobile device 14.

In step 4 and corresponding numeral 4 in Fig. 4, the biometric face recognition data is sent to the mobile device 14 via the access transceiver 22. The processor 28 of the mobile device 14 receives the biometric face recognition data via the transceiver 32 of the mobile device 14. The processor 28 executes an algorithm for comparing the stored biometric face recognition data with the biometric face recognition data received from the identification device 20. This may be done within the secure element 36.

In step 5 and corresponding numeral 5 in Fig. 4, if it is verified that the two sets of biometric face recognition data are identical which indicates that the person 16 standing in front of the identification device 20 is identical with the person 16 stored in the mobile device 14, the processor 28 generates a confirmation signal which is sent to the access control system 12 along with the identification information and/or the access authorization data. In the embodiment of Fig. 1, this is done via the secure channel between the access transceiver 22 and the transceiver 32 of the mobile device 14. In the embodiment of Fig. 2, the mobile device 14 sends the confirmation signal, the identification information, and/or the access authorization data to remote the authorization device 18. Optionally, the biometric face recognition data is associated with a unique identifier which is also sent to the authorization device 18 along with the biometric face recognition data. The unique identifier uniquely defines the biometric face recognition data but does not allow conversion of the unique identifier into the biometric data 37.

In step 6 and corresponding numeral 6 in Fig. 4, the authorization device 18 checks whether access should be granted to the person 16. Conditions for granting access may include the receipt of the confirmation signal, valid access authorization data, and/or the identification information indicates that the person 16 is eligible to enter the restricted area (for example, the identification information matches information of eligible persons stored in the authorization device 18). If access should be granted the person 16, the authorization device 18 generates an access signal which is sent to the access control means 24. In the embodiment of Fig. 1, the access signal is an internal signal of the access control system. In the embodiment of Fig. 2, the authorization device 18 sends the access signal to the access transceiver 22 which forwards the access signal to the access control means 24. Optionally, the authorization device 18 does not generate the access signal if the authorization device 18 has already received the unique identifier in connection with a different biometric face recognition data. This ensures that any set of biometric face recognition data cannot be used for a different person 16.

In step 7 and corresponding numeral 7 in Fig. 4, upon receipt of the access signal, the access control means 24 opens the blocking element or unlocks the blocking element so that the person 16 can path through the access control means 24.

In the embodiments described above, the identification device 20 includes a camera. However, it is also possible that identification device 20 includes a fingerprint scanner and the mobile device 14 also includes a fingerprint scanner. In this case (not shown in the figures), the biometric data 37 generated and exchanged between the mobile device 14 and the access control means 24 is biometric fingerprint data (such as fingerprint recognition data). All other aspects are not changed.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

## Claims

1. A method for identifying a person (16), comprising the steps of
a) storing information on the identity of the person (16) and/or access authorization data on the mobile device (16) as well as storing biometric data (37) of the person (16) on a mobile device (14) of the person (16);
b) sending the identity information of the person (16) and/or the access authorization data from the mobile device (14) to an authorization device (18);
c) obtaining biometric data (37) of the person (16) by an identification device (20);
d) sending the biometric data (37) from the identification device (20) to the mobile device (14);
e) comparing, only on the mobile device (14), the biometric data (37) from the identification device (20) with the stored biometric data (37) for verifying the identity of the person (16); and
f) sending a confirmation signal from the mobile device (14) to the authorization device (18) if the comparison of step e) verifies the identity of the person (16).

2. The method of claim 1, wherein the access authorization data are associated with the identity of the person (16) and/or the biometric data (37).

3. The method of claims 1 or 2, further comprising an access control means (24) for allowing or denying access to a restricted area, wherein the method further comprises step g) of sending, by the authorization device (18), an access signal allowing access by the access control means (24) to the access control means (24) if the confirmation signal is received by the authorization device (18) and if the authorization device (18) determines that the person (16) is authorised to pass the access control means (24).

4. The method of claim 3, wherein the person (16) is authorised to pass the access control means (24) if the identity of the person (16) is on a list of authorised persons stored with the authorization device (18) and/or the access authorization data are valid.

5. The method of claims 3 or 4, wherein the authorization device (18), the access control means (24), and the identification device (20) are integrated in a single system exchanging information, wherein the mobile device (14) communicates with the identification device (20) and/or the authorization device (18) using short-range wireless technology.

6. The method of claims 3 or 4, wherein the authorization device (18) is separate to the identification device (20) and the access control means (24), wherein the identity of the person (16) remains solely with the authorization device (18).

7. The method of claim 6, wherein the mobile device (14) communicates with the identification device (20) using short-range wireless technology and the mobile device (14) communicates with the authorization device (18) via the internet.

8. The method of any preceding claim, wherein the information on the identity of the person (16) and the biometric data (37) of the person (16) is verified by a third party and cannot be changed by the person (16).

9. The method of any preceding claim, wherein
the identification device (20) includes a camera and the biometric data (37) includes face recognition data and/or eye recognition data and/or
the identification device (20) includes a fingerprint scanner and the biometric data (37) includes fingerprint recognition data.

10. The method of any preceding claim, wherein step b) further comprises sending a unique identifier of the biometric data (37) to the authorization device (18), the unique identifier uniquely defines the biometric data (37) but does not allow conversion of the unique identifier into the biometric data (37), wherein the authorization device (18) denies access if the unique identifier was already used with another person (16).

11. The method of any preceding claim, wherein
the identification device (20) does not store the biometric data (37) obtained in step c), and/or
wherein step d) includes sending raw biometric data (37) obtained in step c) or the identification device (20) creates meta data of the raw data biometric data (37) obtained in step c).

12. A system for identifying a person (16), comprising
a mobile device (14) storing information on the identity of the person (16) and/or access authorization data on the mobile device (16), the mobile device (14) further storing biometric data (37) of the person (16),
an identification device (20) configured to obtain biometric data (37) of the person (16), and
an authorization device (18),
wherein the identification device (20) is configured to send the obtained biometric data (37) of the person (16) to the mobile device (14),
wherein only the mobile device (14) is configured to compare the biometric data (37) from the identification device (20) with the stored biometric data (37) for verifying the identity of the person (16),
wherein the mobile device (14) is configured to send the identity of the person (16) and/or the access authorization data to the authorization device (18) and is configured to send a confirmation signal to the authorization device (18) if the comparison verifies the identity of the person (16).

13. The system of claim 14, further comprising an access control means (24) for allowing or denying access to a restricted area, wherein the authorization device (18) is configured to send an access signal allowing access by the access control means (24) to the access control means (24) if the confirmation signal is received by the authorization device (18) and if the authorization device (18) determines that the person (16) is authorised to pass the access control means (24).

14. A method for identifying a person (16), the method being implemented on a mobile device (14) of a person (16) and comprising the steps of
a) storing information on the identity of the person (16) and/or access authorization data on the mobile device (16) as well as storing biometric data (37) of the person (16) on the mobile device (14);
b) sending the identity of the person (16) and/or the access authorization data from the mobile device (14) to an authorization device (18);
c) receiving biometric data (37) obtained by an identification device (20);
d) comparing the biometric data (37) from the identification device (20) with the stored biometric data (37) for verifying the identity of the person (16); and
e) sending a confirmation signal from the mobile device (14) to an authorization device (18) if the comparison of step d) verifies the identity of the person (16).

15. Mobile device, comprising a processor (28), a memory (30), and a transceiver (32),
wherein the memory (30) is configured to store information on the identity of a person (16) and/or access authorization data, the memory (30) is further configured to store biometric data (37) of the person (16); and
wherein the processor (28) is configured to
send the identity of the person (16) and/or the access authorization data to an authorization device (18) via the transceiver (32),
receive biometric data (37) obtained by an identification device (20) via the transceiver (32),
compare the biometric data (37) from the identification device (20) with the stored biometric data (37) for verifying the identity of the person (16), and
send a confirmation signal, via the transceiver (32), to the authorization device (18) if the comparison of step d) verifies the identity of the person (16).
